# EUROPÄISCHE PATENTSCHRIFT

(11) **EP 0 545 118 B1**
(45) Veröffentlichungstag und Bekanntmachung des Hinweises auf die Patenterteilung: **17.04.1996**
(21) Anmeldenummer: 92119431.2
(22) Anmeldetag: 13.11.1992
(51) Int. Cl.: A62B 25/00

(54) **Behälter für eine Sauerstoffversorgungseinheit**
Container for an oxygen supply unit
Réceptacle pour dispositif d'aménagement d'oxygène

(30) Priorität: 06.12.1991 DE 4140265
(43) Veröffentlichungstag der Anmeldung: 09.06.1993
(73) Patentinhaber: Drägerwerk Aktiengesellschaft, D-23542 Lübeck (DE)
(72) Erfinder: Schnoor, Christian, W-2400 Lübeck 1 (DE); Thometschek, Roderich, W-2406 Stockelsdorf (DE); Rittner, Wolfgang, W-2407 Bad Schwartau (DE)

(56) Entgegenhaltungen:
- EP-A- 0 242 704
- EP-A- 0 268 747
- DE-A- 3 719 427

## Beschreibung

Die Erfindung betrifft einen Behälter für eine Sauerstoffversorgungseinheit gemäß dem Oberbegriff von Anspruch 1.

In der EP-A-0 268 747, welche einen Behälter gemäß dem Oberbegriff von Anspruch 1 zeigt, wird eine Verschlußeinrichtung zum Verschließen eines Bereitschaftsbehälters für Atemschutzgeräte mit Einsenkungen im Behälterboden und in den -wänden angegeben.

Eine Sauerstoffversorgungseinheit zum Einbau in ein Fluggerät ist aus der DE-A1 37 19 427 bekanntgeworden. Derartige Sauerstoffversorgungseinheiten sind in den Deckenaufbauten im Passagierraum von Flugzeugen angeordnet und dienen im Bedarfsfall zur Versorgung der Passagiere mit dem zur Atmung notwendigen Sauerstoff. Die Sauerstoffversorgungseinheit besteht aus einem Behälter, in welchem Sauerstoffmasken und ein Sauerstoffgenerator angeordnet sind und einer um um ein Gelenk schwenkbaren Behältertür, die zum Verschluß des Behälters dient. Der Behälter hat einen nach außen umgelegten, umlaufenden Behälterrand, an dem das Gelenk der Behältertür befestigt ist. Parallel zur Schwenkachse des Gelenks sind am Behälterrand um ein Scharnier klappbare Profilschienen angebracht, mit denen die komplette Sauerstoffversorgungseinheit in den Deckenaufbau des Flugzeuges eingehängt werden kann. Der Behälter ist in einstückiger Ausführungsform aus leichtem Material wie z.B. Kunststoff hergestellt, mit einem Verstärkungsrahmen, der auf den Kunststoff-Behälter im Bereich des Behälterrandes aufgesetzt ist.

Nachteilig bei dem bekannten Behälter ist, daß neben dem Kunststoff-Behälter noch ein Verstärkungsrahmen erforderlich ist, der dem Behälter der Sauerstoffversorgungseinheit die erforderliche Stabilität gibt. Derartige Behälter werden in großen Stückzahlen gefertigt und sind auch im Fluggerät in entsprechender Anzahl vorhanden. Es besteht daher das Bestreben, diese sowohl mit kleinstmöglichem Gewicht, einem Minimum von Teilen als auch mit hoher mechanischer Stabilität zu fertigen.

Der Erfindung liegt die Aufgabe zugrunde, einen Behälter derart zu verbessern, daß er eine hohe Verwindungssteifigkeit hat, eine hohe Biegesteifigkeit besitzt im Bereich von Anschlußelementen wie Gelenke und Scharniere, einstückig fertigbar ist und ein kleinstmögliches Gewicht aufweist.

Die Lösung der Aufgabe erfolgt dadurch, daß der Behälter Versteifungsmittel aufweist, welche mindestens als sickenförmige
- erste Einsenkungen vom Behälterboden über die hintere Behälterwand in den hinteren Behälterrand, als
- zweite Einsenkungen vom Behälterboden über die vordere Behälterwand in den vorderen Behälterrand, und/oder als
- dritte Einsenkungen im Übergangsbereich zwischen der hinteren Behälterwand und den seitlichen Behälterwänden verlaufen.

Der Vorteil der Erfindung besteht im wesentlichen darin, daß durch eine spezielle Führung der sickenförmigen Einsenkungen sowohl die Verwindungssteifigkeit des Behälters deutlich verbessert wird als auch eine Versteifung im Bereich der Anschlußelemente wie Gelenke und Scharniere erreicht wird. Die in das Behälterinnere weisenden sickenförmigen Einsenkungen wirken hierbei, wie Versuche gezeigt haben, als Versteifungselemente, die sowohl die Krafteinleitung vom Behälterrand in die Behälterwand bzw. den Behälterboden verbessern als auch der Behälterwand und dem Behälterboden die nötige Biege- und Torsionssteifigkeit geben. Sickenförmige Einsenkungen als Versteifungselemente sind zwar bei Behältern bekannt, es kommt aber im vorliegenden Fall auf die spezielle Führung bzw. den Ort der Einsenkungen an, um die gewünschte Steifigkeit des gesamten Behälters zu erreichen. Wegen der verbesserten Steifigkeit des erfindungsgemäßen Behälters, ist ein separater Verstärkungsrahmen nicht mehr erforderlich.

Es sind erste Einsenkungen vorgesehen, die vom Behälterboden über die hintere Behälterwand in den hinteren Behälterrand verlaufen. Die zweiten Einsenkungen verlaufen vom Behälterboden über die vordere Behälterwand in den vorderen Behälterrand. Die dritten Einsenkungen befinden sich im Übergangsbereich zwischen der hinteren Behälterwand und den angrenzenden seitlichen Behälterwänden.

Vorteilhafte Ausgestaltungen der Erfindung sind in den Unteransprüchen angegeben.

Zur Erhöhung der Steifigkeit im Bereich des Behälterbodens ist es zweckmäßig, freie Enden zweier benachbarter erster oder zweiter Einsenkungen als Halbkreisbogen zusammenzuführen.

Eine weitere Versteifung des Behälterbodens wird erreicht, wenn dieser in Kombination mit den sickenförmigen ersten bzw. zweiten Einsenkungen, mit einer rechteckförmigen, planen in das Behälterinnere weisenden Vertiefung versehen ist. Die plane Vertiefung ist in der Mitte des Behälterbodens vorgesehen, wobei die hier verlaufenden sickenförmigen ersten bzw. zweiten Einsenkungen, welche die Vertiefung kreuzen, in diesem Bereich unterbrochen sind und danach zumindestens teilweise fortgeführt werden. Seitlich an der planen Vertiefung vorbeilaufende sickenförmige Einsenkungen können mit dieser Vertiefung in Form von sickenförmigen Stegen verbunden sein.

Die Scharniere am vorderen und hinteren Behälterrand bestehen aus einzelnen Zungen, die in die Profilschienen eingreifen. Die Zungen sind in der Weise verstärkt, daß die sickenförmigen ersten bzw. zweiten Einsenkungen auf die Zungen zulaufen. Auf diese Weise wird sowohl eine größere Steifigkeit des Behälterrandes erreicht als auch eine gute Krafteinleitung von den Zungen in den Behälterrand.

Zweckmäßigerweise besitzen die ersten Einsenkungen im Bereich der Zungen eine sich zu den Zungen hin verjüngende Querschnittskontur.

Am vorderen Behälterrand werden zweite sickenförmige Einsenkungen von der vorderen Behälterwand in den vorderen Behälterrand und dort zu den einzelnen Zungen geführt.

Zweckmäßigerweise besitzen die zweiten Einsenkungen im Bereich der Zungen ebenfalls eine sich zu den Zungen hin verjüngende Querschnittskontur.

Das Gelenk für die Behältertür ist zweckmäßigerweise als ein Blechfalz ausgeführt, welcher von den seitlichen Behälterrändern aus senkrecht nach oben abgekantet ist. Die Versteifung dieses Behälterteils erfolgt durch dritte sickenförmige Einsenkungen, welche von der hinteren Behälterwand in den hinteren Behälterrand verlaufen und zu den Blechfalzen hinweisen. Üblicherweise liegen die dritten Einsenkungen im Übergangsbereich zwischen den seitlichen Behälterwänden und der hinteren Behälterwand bzw. den seitlichen Behälterrändern und dem hinteren Behälterrand.

Zweckmäßigerweise besitzen die dritten Einsenkungen im Bereich der Blechfalze eine sich zu den Blechfalzen hin verjüngende Querschnittskontur.

Eine zusätzliche Verstärkung des Behälters wird dadurch erreicht, daß die vordere Behälterwand mit einer vierten Einsenkung als Versteifungsmittel ovalförmig in den Behälterinnenraum ausgeformt ist. Die vordere Behälterwand kann zusätzlich auch noch mit sickenförmigen Einsenkungen, parallel oder senkrecht zur Schwenkachse des Gelenks verlaufend, versehen sein. Bei der ovalförmigen Ausformung der vorderen Behälterwand besitzt der Behälterboden an dieser Stelle ebenfalls die ovale Kontur, während die Oberseite parallel zum vorderen Behälterrand verläuft. Ein eventueller Höhenunterschied kann durch eine Stufe abgesetzt sein. Die Stufe bewirkt ebenfalls eine Versteifung des Behälters im Bereich der vorderen Behälterwand. Die Oberseite der Ausformung enthält üblicherweise Durchbrüche zur Montage einer Behälter-Verschluß-Einrichtung.

Die Stabilität des Behälterrandes kann neben den ersten, zweiten und dritten sickenförmigen Einsenkungen noch durch einen mindestens teilweise umlaufenden sickenförmigen Wulst als Versteifungsmittel erhöht werden. Der sickenförmige Wulst ist an den Stellen unterbrochen, wo Kreuzungspunkte mit den sickenförmigen Einsenkungen vorhanden sind.

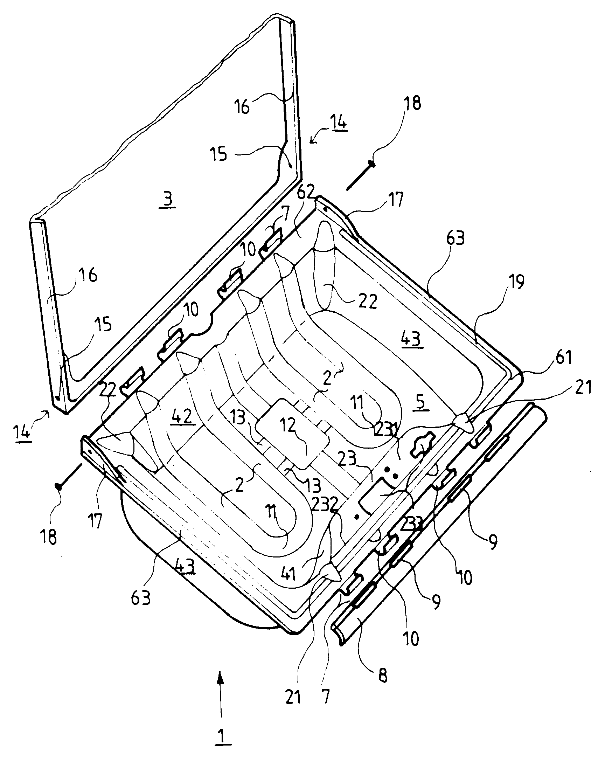

Ein Ausführungsbeispiel der Erfindung ist in der Zeichnung veranschaulicht und im folgenden näher erläutert.

Die einzige Figur zeigt einen Behälter (1) in perspektivischer Ansicht mit einer Behältertür (3), welche als Ausschnitt dargestellt ist.
Der Behälter (1) ist topfförmig aus Aluminiumblech der Stärke 0,5 Millimeter gefertigt, mit einer vorderen Behälterwand (41), einer hinteren Behälterwand (42), zwei seitlichen Behälterwänden (43) und einem Behälterboden (5). Der Behälterrand ist als vorderer Behälterrand (61), hinterer Behälterrand (62) und seitlicher Behälterrand (63) nach außen umgelegt und dient als Anlagefläche für die Behältertür (3). Der vordere Behälterrand (61) und der hintere Behälterrand sind mit je einem Scharnier (7) versehen zur Befestigung von Profilschienen (8). In der Figur ist nur eine Profilschiene (8) am vorderen Behälterrand (61) gezeigt.

Das Scharnier (7) besteht aus Schlitzen (9) in den Profilschienen (8), in welche korrespondierend geformte Zungen (10) eingreifen, die einstückig an den vorderen - (61) bzw. hinteren Behälterrand (62) angeformt sind. Die Profilschienen (8) sind um die Scharniere (7) klappbar und dienen dazu, den Behälter (1) zusammen mit einer in ihm befindlichen, in der Figur nicht dargestellten Sauerstoffversorgungseinheit, in ein ebenfalls nicht dargestelltes Fluggerät einzubauen.

Zu Versteifung des Behälters (1) einerseits und der Verstärkung der Zungen (10) andererseits sind erste sickenförmige Einsenkungen (2) vorgesehen, die vom Behälterboden (5) über die hintere Behälterwand (42) in den hinteren Behälterrand (62) verlaufen und dort, sich konisch verjüngend, in den Zungen (10) enden. Im Bereich des Behälterbodens (5) sind zwei benachbarte erste Einsenkungen (2) durch jeweils einen sickenförmigen Halbkreisbogen (11) verbunden. Zur Versteifung der Zungen (10) an dem vorderen Behälterrand (61) sind zweite Einsenkungen (21) vorgesehen, die, sich konisch verjüngend, in den Zungen (10) auslaufen. Die zweiten Einsenkungen (21) verlaufen von der vorderen Behälterwand (41) in den vorderen Behälterrand (61). Der Behälterboden (5) besitzt ferner als weiteres Versteifungsmittel eine in das Behälterinnere weisende plane Vertiefung (12), die mittels sickenförmiger Stege (13) mit den ersten Einsenkungen (2) verbunden sind. Die Vertiefung (12) dient zur Stabilisierung der planen Fläche des Behälterbodens (5) zwischen den ersten Einsenkungen (2) und kann von der Rückseite her gleichzeitig zur Anbringung eines Typenschildes genutzt werden.

Die Behältertür (3) ist mittels eines Gelenkes (14) mit dem Behälter (1) verbunden. In der Figur ist das Gelenk (14) im demontierten Zustand gezeigt. Das Gelenk (14) besteht aus einer Bohrung (15) im Türrand (16) der Behältertür (3) und aus am seitlichen Behälterrand (63) befindlichen hochgestellten Blechfalzen (17), wobei die Verbindung mittels durchgesteckter Stifte (18) erfolgt. Zur Versteifung des hinteren Behälterrandes (62) im Bereich der Blechfalze (17) sind dritte Einsenkungen (22) vorgesehen, die von der hinteren Behälterwand (42) bzw. aus dem Übergangsbereich zwischen der hinteren Behälterwand (42) mit den seitlichen Behälterwänden (43), in den hinteren Behälterrand (62) verlaufen und dort auf die Blechfalze (17) weisen. Die ersten-, zweiten- und dritten Einsenkungen (2, 21, 22) sind mit einem Radius von zwischen 6 und 7 Millimeter gefertigt.

Zusätzlich zu den ersten, zweiten und dritten Einsenkungen (2, 21, 22) werden der vordere Behälterrand (61) und die beiden seitlichen Behälterränder (63) durch einen umlaufenden sickenförmigen Wulst (19) verstärkt, welcher im Bereich der Blechfalze (17) beginnt bzw. nach einmaligen Umlauf dort endet.

Eine weitere Versteifung des Behälters (1) wird dadurch erreicht, daß die vordere Behälterwand (41) als vierte Einsenkung (23) ovalförmig in den Behälterinnenraum ausgeformt ist. Der Behälterboden (5) besitzt an dieser Stelle ebenfalls die ovalförmige Kontur, während die Oberseite (231) parallel zum vorderen Behälterrand (61) verläuft und ein Höhenunterschied durch eine Stufe (232) abgesetzt ist. Die Stufe (232) führt zu einer zusätzlichen Versteifung der vorderen Behälterwand (41). Die Oberseite (231) enthält Durchbrüche (233) für eine in der Figur nicht dargestellte Behälter-Verschluß-Einrichtung.

## Patentansprüche

1. Behälter für eine Sauerstoffversorgungseinheit, bestehend aus einem Behälterboden (5), vorderen, hinteren und seitlichen Behälterwänden mit einem mindestens teilweise umgelegten Behälterrand und einer um ein Gelenk am hinteren Behälterrand schwenkbaren Behältertür und mit um Scharniere klappbaren Profilschienen am vorderen und hinteren Behälterrand, parallel zur Schwenkachse des Gelenks, dadurch gekennzeichnet, daß der Behälter (1) Versteifungsmittel aufweist, welche mindestens als sickenförmige
- erste Einsenkungen (2) vom Behälterboden (5) über die hintere Behälterwand (42) in den hinteren Behälterrand (62), als
- zweite Einsenkungen (21) vom Behälterboden (5) über die vordere Behälterwand (41) in den vorderen Behälterrand (61), und/oder als
- dritte Einsenkungen (22) im Übergangsbereich zwischen der hinteren Behälterwand (42) und den seitlichen Behälterwänden (43) verlaufen.

2. Behälter nach Anspruch 1, dadurch gekennzeichnet, daß im Bereich des Behälterbodens (5) zwei benachbarte erste oder zweite Einsenkungen (2, 21) als Halbkreisbogen (11) zusammengeführt sind.

3. Behälter nach Anspruch 1 oder 2, dadurch gekennzeichnet, daß der Behälterboden (5) in der Behälterboden-Mitte eine rechteckförmige, plane, in das Behälterinnere weisende Vertiefung (12) als Versteifungsmittel aufweist.

4. Behälter nach einem der Ansprüche 1 bis 3, dadurch gekennzeichnet, daß der hintere Behälterrand (62) Zungen (10) als Teil des Scharniers (7)aufweist, welche mit vom Behälterboden (5) über die hintere Behälterwand (4) in den hinteren Behälterrand (62) verlaufenden ersten Einsenkungen (2) verbunden sind.

5. Behälter nach Anspruch 4, dadurch gekennzeichnet, daß die ersten Einsenkungen (2) im Bereich der Zungen (10) eine sich zu den Zungen (10) hin verjüngende Querschnittskontur besitzen.

6. Behälter nach einem der Ansprüche 1 bis 4, dadurch gekennzeichnet, daß der vordere Behälterrand (61) Zungen (10) als Teil des Scharniers (7)aufweist, welche mit den von der vorderen Behälterwand (41) in den vorderen Behälterrand (61) verlaufenden zweiten Einsenkungen (21) verbunden sind.

7. Behälter nach Anspruch 6, dadurch gekennzeichnet, daß die zweiten Einsenkungen (21) im Bereich der Zungen (10) eine sich zu den Zungen (10) hin verjüngende Querschnittskontur besitzen.

8. Behälter nach einem der Ansprüche 1 bis 7, dadurch gekennzeichnet, daß der hintere Behälterrand (62) Blechfalze (17) als Teil des Gelenks (14) aufweist, welche mit den von der hinteren Behälterwand (42) in den hinteren Behälterrand (62) verlaufenden dritten Einsenkungen (22) verbunden sind.

9. Behälter nach Anspruch 8, dadurch gekennzeichnet, daß die dritten Einsenkungen (22) im Bereich der Blechfalze (17) eine sich zu den Blechfalzen (17) hin verjüngende Querschnittskontur besitzen.

10. Behälter nach einem der Ansprüche 1 bis 9, dadurch gekennzeichnet, daß die vordere Behälterwand (41) als Versteifungsmittel eine vierte Einsenkung (23) besitzt, die ovalförmig in den Behälterinnenraum ausgeformt ist.

11. Behälter nach einem der Ansprüche 1 bis 10, dadurch gekennzeichnet, daß die seitlichen Behälterränder (63) und der vordere Behälterrand (61) mindestens teilweise mit einem umlaufenden, sickenförmigen Wulst (19) als Versteifungsmittel versehen sind.

## Claims

1. Container for an oxygen supply unit, consisting of a container floor (5), front, rear and side container walls, having an at least partially displaced container edge and a container door which can be pivoted about a joint at the rear container edge and having mounting channels hinged about hinges at the front and rear container edge, parallel to the swivelling axis of the joint, characterized in that the container (1) has bracing means which extend at least as bead-shaped
- first depressions (2) from the container floor (5) via the rear container wall (42) into the rear container edge (62), as
- second depressions (21) from the container floor (5) via the front container wall (41) into the front container edge (61), and/or as
- third depressions (22) in the transition region between the rear container wall (42) and the side container walls (43).

2. Container according to claim 1, characterized in that in the region of the container floor (5) two adjacent first or second depressions (2, 21) are brought together as semicircles (11).

3. Container according to claim 1 or 2, characterized in that the container floor (5) in the middle of the container floor has as bracing means a rectangular, flat recess (12) pointing into the container interior.

4. Container according to one of claims 1 to 3, characterized in that the rear container edge (62) has tongues (10) as part of the hinge (7), which are connected to first depressions (2) extending from the container floor (5) via the rear container wall (4) into the rear container edge (62).

5. Container according to claim 4, characterized in that the first depressions (2) have in the region of the tongues (10) a cross-sectional contour tapering towards the tongues (10).

6. Container according to one of claims 1 to 4, characterized in that the front container edge (61) has tongues (10) as part of the hinge (7) which are connected to the second depressions (21) extending from the front container wall (41) into the front container edge (61).

7. Container according to claim 6, characterized in that the second depressions (21) have in the region of the tongues (10) a cross-sectional contour tapering towards the tongues (10).

8. Container according to one of claims 1 to 7, characterized in that the rear container edge (62) has sheet folds (17) as part of the joint (14) which are connected to the third depressions (22) extending from the rear container wall (42) into the rear container edge (62).

9. Container according to claim 8, characterized in that the third depressions (22) have in the region of the sheet folds (17) a cross-sectional contour tapering towards the sheet folds (17).

10. Container according to one of claims 1 to 9, characterized in that the front container wall (41) has as bracing means a fourth depression (23) which is formed in an oval shape in the container interior.

11. Container according to one of claims 1 to 10, characterized in that the side container edges (63) and the front container edge (61) are provided at least in part with a circumferential, bead-shaped reinforcement (19) as bracing means.

## Revendications

1. Récipient destine à une unité d'alimentation en oxygène, constitué d'un fond (5) de récipient, de parois de récipient avant, arrière et latérales, comportant des bords de récipient au moins partiellement repliées et une porte de récipient pouvant pivoter autour d'une articulation prévue sur le bord arrière, et comportant des barres profilées rabattables, autour de charnières, prévues sur les bords avant et arrière, parallèlement à l'axe de pivotement de l'articulation, caractérisé en ce que le récipient (1) présente des moyens de raidissement qui s'étendent, au moins selon une forme de nervures,
- en tant que premiers creux (2), du fond (5) du récipient, en passant par la paroi arrière (42), en direction du bord arrière (62) du récipient,
- en tant que deuxièmes creux (21), du fond (5) du récipient, en passant par la paroi avant (41), en direction du bord avant (61) du récipient, et/ou
- en tant que troisièmes creux (22), dans la zone de transition entre la paroi arrière (42) et les parois latérales (43) du récipient.

2. Récipient selon la revendication 1, caractérisé en ce que, dans la zone du fond (5) du récipient, deux premiers ou deuxièmes creux (2, 21) adjacents se rejoignent pour former un demi-cercle (11).

3. Récipient selon la revendication 1 ou 2, caractérisé en ce que le fond (5) du récipient présente, en son milieu, une cavité (12) rectangulaire, plane, orientée en direction de l'intérieur du récipient, servant de moyen de raidissement.

4. Récipient selon l'une des revendications 1 à 3, caractérisé en ce que le bord arrière (62) du récipient présente des languettes (10) faisant partie de la charnière (7), qui sont reliées à des premiers creux (2) s'étendant du fond (5) du récipient, en passant par la paroi arrière (42), en direction du bord arrière (62) du récipient.

5. Récipient selon la revendication 4, caractérisé en ce que les premiers creux (2), dans la zone des languettes (10), présentent une section transversale se rétrécissant en direction des languettes (10).

6. Récipient selon l'une des revendications 1 à 4, caractérisé en ce que le bord avant (61) du récipient présente des languettes (10) faisant partie de la charnière (7), qui sont reliées à des deuxièmes creux (21) s'étendant de la paroi avant (41) du récipient jusqu'au bord avant (61) du récipient.

7. Récipient selon la revendication 6, caractérisé en ce que les deuxièmes creux (21), dans la zone des languettes (10), présentent une section transversale se rétrécissant en direction des languettes (10).

8. Récipient selon l'une des revendications 1 à 7, caractérisé en ce que le bord arrière (62) du récipient présente des parties repliées (17) faisant partie de la charnière (14), qui sont reliées aux troisièmes creux (22) s'étendant de la paroi arrière (42) du récipient jusqu'au bord arrière (62).

9. Récipient selon la revendication 8, caractérisé en ce que les troisièmes creux (22), dans la zone des parties repliées (17), présentent une section transversale se rétrécissant en direction des parties repliées (17).

10. Récipient selon l'une des revendications 1 à 9, caractérisé en ce que la paroi avant (41) du récipient, possède, comme moyen de raidissement, un quatrième creux (23), qui s'étend en ovale à l'intérieur du récipient.

11. Récipient selon l'une des revendications 1 à 10, caractérisé en ce que les bords latéraux (63) du récipient et le bord avant (61) du récipient sont pourvus, au moins partiellement, d'un bourrelet (19) circonférentiel en forme de nervure, servant de moyen de raidissement.
